# EUROPEAN PATENT SPECIFICATION

(11) **EP 0 621 422 B1**
(45) Date of publication and mention of the grant of the patent: **06.08.1997**
(21) Application number: 94200581.0
(22) Date of filing: 07.03.1994
(51) Int. Cl.: F16H 61/02, F16H 59/40

(54) **Control circuit for a transmission**
Steuerkreis für ein Getriebe
Circuit de commande pour une transmission

(30) Priority: 27.03.1993 GB 9306413; 31.01.1994 GB 9401804
(43) Date of publication of application: 26.10.1994
(73) Proprietor: Delphi France Automotive Systems, 92257 La Garenne-Colombes (FR)
(72) Inventor: Bromhorst, Albert, F-67310 Romanswiller (FR)
(74) Representative: Denton, Michael John

(56) References cited:
- EP-A- 0 010 935
- EP-A- 0 040 065
- EP-A- 0 503 691
- US-A- 3 937 107
- US-A- 4 301 689
- PATENT ABSTRACTS OF JAPAN vol. 12, no. 416 (M-759) 4 November 1988 & JP-A-63 152 753 (MITSUBISHI)

## Description

This invention relates to a control circuit for a hydraulically operated transmission of a vehicle and, in particular, to a control circuit for preventing a transmission downshifting from one gear ratio to another gear ratio when the speed of the vehicle is above a predetermined level. EP-A-0503691 discloses a control circuit in accordance with the preamble of claim 1.

As is well known, a hydraulically operated transmission includes a shift lever which is movable by a vehicle operator to manually select the required drive for a vehicle. The usual selectable drive ranges, in order, comprise park (P), reverse drive (R), neutral (N), and one or more forward drive (D), (1), (2) modes. When in automatic drive mode (D), a control module (which may be electronic based or computer based) selects the required forward drive gear for the transmission based on a number of monitored parameters. Selection of first gear ratio, either manually by the vehicle operator moving the shift lever, or automatically by the control module for the transmission, whilst the vehicle is travelling in a forward direction above a predetermined speed can result in severe damage to the transmission. Similar problems also apply to the downshifting to other forward gear ratios at speeds above respective predetermined levels.

It is an object of the present invention to overcome this problem.

To this end, a control circuit in accordance with the present invention is characterised over EP-A-0503691 by the features specified in the characterising portion of claim 1.

The present invention provides a means of protecting the transmission from damage by preventing operation of the transmission in first gear ratio should the vehicle speed be above a predetermined level. The present invention can also be modified to allow easy cycling between first gear ratio and reverse gear ratio should a driven wheel of the vehicle become stuck.

The present invention will now be described, by way of example, with reference to the accompanying drawings, in which:-
Figure 1 is a schematic view of a hydraulic control circuit for a hydraulically operated transmission, with the hydraulic control circuit set for placing the transmission in first gear of Drive (D) mode;
Figure 2 is a similar view to Figure 1 with the hydraulic control circuit set for placing the transmission in second gear of Drive (D) mode;
Figure 3 is a similar view to Figure 1 with the hydraulic control circuit set for placing the transmission in first gear of manual mode;
Figure 4 is a similar view to Figure 1 with the hydraulic control circuit set for placing the transmission in second gear of manual mode;
Figure 5 is a graph of fluid pressure against time during actuation of a friction device of Figure 1;
Figure 6 is a table of drive ratio against friction device engagement for the arrangement shown in Figures 1 to 4;
Figure 7 is a circuit diagram for a control module for use with the arrangement shown in Figures 1 to 4;
Figure 8 is a circuit diagram of an embodiment of a control circuit in accordance with the present invention which can be used with a transmission and control module as shown in Figures 1 to 7; and
Figure 9 is a circuit diagram of a modified version of the circuit shown in Figure 8.

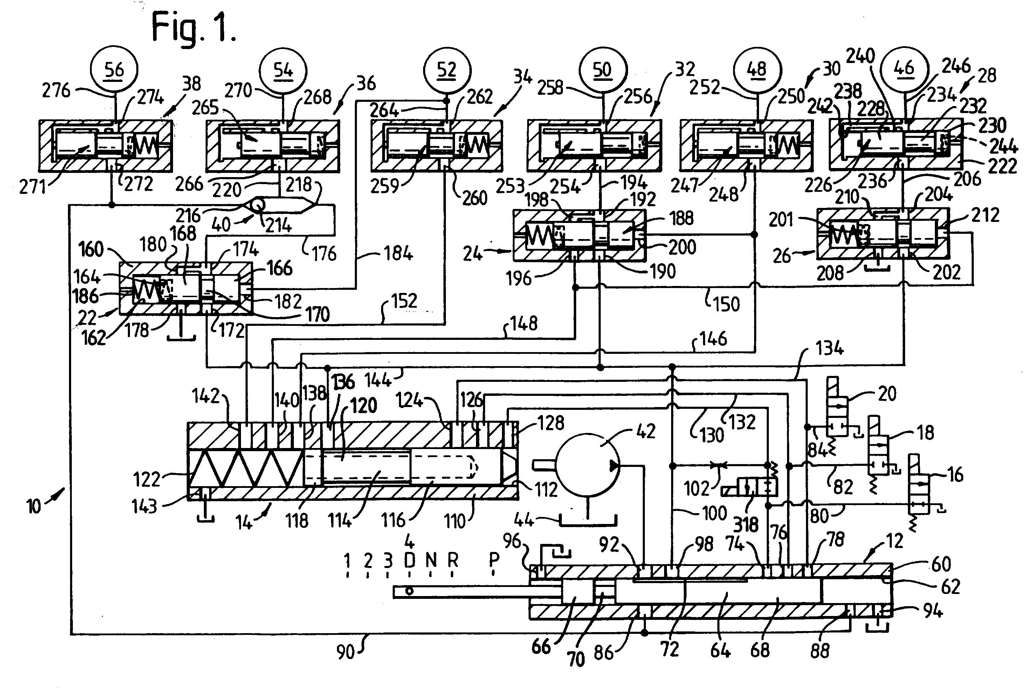

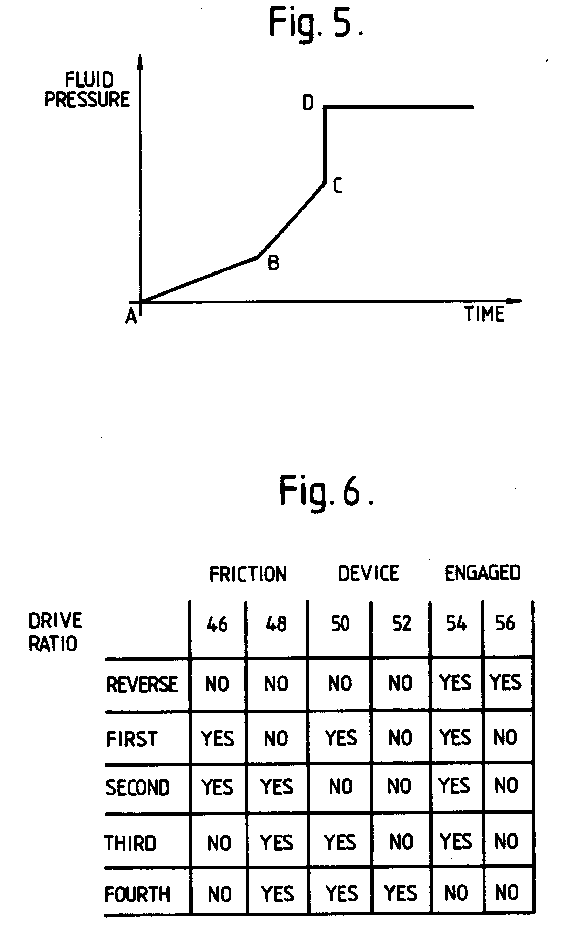

Referring to Figures 1 to 4, a hydraulic control circuit 10 is shown. The hydraulic control circuit 10 is for use in a hydraulically operated transmission of a vehicle in which the transmission has four forward gear ratios and one reverse gear ratio. The hydraulic control circuit 10 comprises a manual valve 12; a shift valve 14; four solenoid operated valves (solenoid valves) 16,18,20,318; three pressure application valves 22,24,26; six pressure control valves 28,30,32,34,36,38; a ball valve 40; and a pump 42. The pump 42 provides a source of pressurised hydraulic fluid for the hydraulic control circuit 10 and is connected to a fluid reservoir 44, and may also be connected to a pressure relief valve (not shown). The pressure control valves 28,30,32,34,36,38 of the hydraulic control circuit 10 are fluidly connected to friction devices 46,48,50,52,54,56 respectively, (which are usually in the form of clutches or band brakes) within the transmission for controlling the intermeshing of various gears within the transmission. A predetermined pattern (Figure 6) of engagement and disengagement of the friction devices determines the required drive ratio for the transmission. The arrangement of friction devices and gears (including planetary gear sets) within the transmission can be any suitable arrangement known to those skilled in the art to provide the required drive ratios, and will not be described herein in detail.

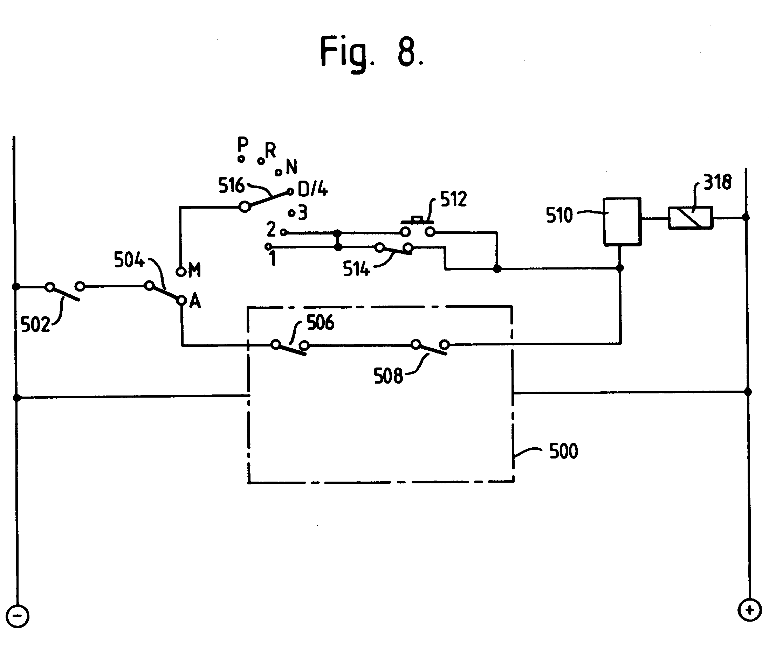

The manual valve 12 comprises a housing 60 having a longitudinally extending bore 62 therein. A spool 64 is slidably positioned in the bore 62. The spool 64 comprises a pair of spaced lands 66,68 separated by a portion of reduced diameter 70. One of the lands 68 includes a longitudinally extending groove 72 in its outer surface. The housing 60 includes three ports 74,76,78 for connecting the solenoid valves 16,18,20 respectively to the bore 62 by way of fluid lines 80,82,84 respectively. The housing 60 also includes a pair of ports 86,88 for connecting the pressure control valve 36 and one end 216 of the ball valve 40 to the bore 62 by way of fluid line 90; a port 92 for connecting the bore to the pump 40; a pair of ports 94,96 at the longitudinal extremities of the bore for connecting the bore to exhaust; and a further port 98 which is connected by way of fluid line 100 and restrictor 102 to the port 74 and the solenoid valve 16. The axes of the ports 86 and 92 lie in the same radially extending plane. The position of the spool 64 relative to the bore 62 is controlled manually by the vehicle operator by movement of a shift lever 516 (which is not shown in detail, but which is well known to those skilled in the art and outlined below in Figure 8 as item 516), to provide fluid connection between the various ports in the manual valve 12 as will be described in more detail below.

The shift valve 14 comprises a housing 110 having a longitudinally extending bore 112 therein. A spool 114 is slidably positioned in the bore 112. The spool 114 comprises a pair of spaced lands 116,118 separated by a portion of reduced diameter 120 which defines a fluid path. The housing 110 includes three ports 124,126,128 adjacent one end thereof for connecting the solenoid valves 16,18,20 respectively to the bore 112, and for connecting the ports 74,76,78 respectively of the manual valve 12 to the bore 112 of the shift valve 14, by way of fluid lines 130,132,134 respectively. The spool 114 is biased by a spring 122 towards the said one end of the bore 112 containing the ports 124,126,128. The housing 110 further includes four ports 136,138,140,142 axially spaced from the ports 124,126,128. Port 136 is connected by fluid line 144 to the pressure application valves 22,24,26, and by fluid line 100 to the port 98 in the manual valve 12. Port 138 is connected by fluid line 146 to the pressure control valve 30. Port 140 is connected by fluid lines 148 and 150 to the pressure application valves 24,26 respectively. Port 142 is connected by fluid line 152 to the pressure control valve 34. A port 143 is positioned at the opposite end of the bore 112 to the ports 124,126,128 and is connected to exhaust. The position of the spool 114 relative to the housing 110 provides fluid connection between the various ports in the shift valve 14 as will be described in more detail below. In the rest position, ports 138, 140 and 142 are connected to exhaust by way of port 143.

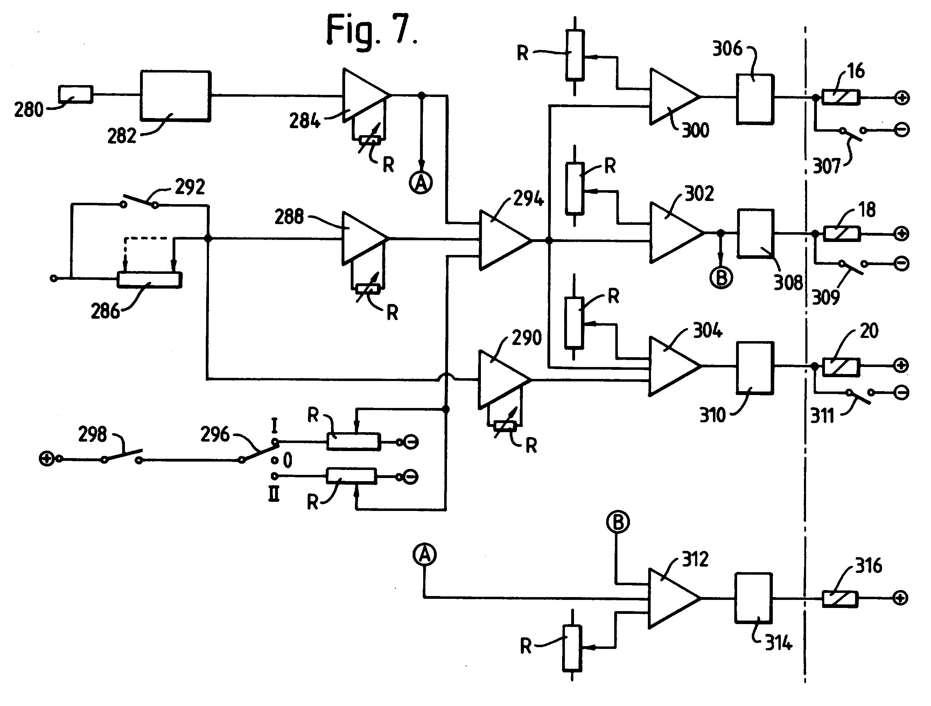

The solenoid valves 16,18,20 are actuable to connect the ports 74,76,78 respectively in the manual valve 12, and the ports 124,126,128 respectively in the shift valve 14, to exhaust when required, as will be described in more detail below. The solenoid valves 16,18,20 are actuated by a control module (Figure 7), which monitors various parameters associated with the vehicle including the transmission output speed or vehicle speed, the position of the engine throttle, and the position of the spool 64 in the manual valve 12, and preferably also accelerator pedal position. The control module compares the transmission output speed or vehicle speed with the throttle position, and actuates the solenoid valves 16,18,20 accordingly, as will be explained in more detail below. The control module is also set such that actuation of the solenoid valves 16,18,20 by the control module is only possible when the spool 64 of the manual valve 12 is in the Drive (D) position, and preferably only when the accelerator pedal is depressed. In their de-actuated state or on failure of the control module, the solenoid valves 16,18,20 are closed.

The pressure application valve 22 comprises a housing 160 having a longitudinally extending bore 162 therein. A spool 164 is slidably positioned in the bore 162. The spool 164 comprises a pair of spaced lands 166,168 separated by a portion of reduced diameter 170. The housing 160 has a first pair of ports 172,174, the axes of which lie in the same radially extending plane. Port 172 defines an inlet port and is connected by fluid line 144 to port 136 in the shift valve 14. Port 174 defines an outlet port and is connected to the other end 218 of ball valve 40 by fluid line 176. The housing 160 has a second pair of ports 178,180, the axes of which lie in the same radially extending plane, but axially spaced from ports 172,174. Port 178 is connected to exhaust. Port 180 is connected to port 174. The housing 160 also has an axially extending port 182 in one end thereof which is connected by fluid line 184 to the friction device 52. Port 182 defines a control port. The spool 164 is biased towards the control port 182 by a spring 186. In the rest position, the inlet and outlet ports 172 and 174 are fluidly connected, and the port 178 is isolated from port 180 by land 168. As fluid pressure increases at control port 182, the spool 164 is moved against the bias of the spring 186 to bring land 166 into a position which fluidly isolates the inlet and outlet ports 172 and 174 from one another, but which opens a fluid connection between ports 178 and 180 to connect outlet port 174 to exhaust.

Pressure application valve 24 has a similar arrangement to pressure application valve 22 with a spool 188, an inlet port 190 connected to fluid line 144 and a port 198 connected to outlet port 192. However, outlet port 192 is connected to pressure control valve 32 by way of fluid line 194; port 196 is connected to fluid lines 148 and 150; and control port 200 is connected to fluid line 146. Pressure application valve 26 also has a similar arrangement to pressure application valve 22 with a spool 201, an inlet port 202 connected to fluid line 144, port 208 connected to exhaust, and port 210 connected to outlet port 204. However, outlet port 204 is connected to pressure control valve 28 by way of fluid line 206; and control port 212 is connected to fluid lines 148 and 150.

The ball valve 40 comprises a ball 214 movable between one end 216 and the other end 218. As mentioned above, said one end 216 is connected to fluid line 90, and said other end 218 is connected to fluid line 176. Intermediate the two ends 216,218 the ball valve 40 is connected to the pressure control valve 36 by way of fluid line 220. The ball 214 is movable between the two ends 216,218 to connect fluid line 220 to fluid line 90 when the fluid is pressurised in fluid line 90, or to connect fluid line 220 to fluid line 176 when the fluid is pressurised in fluid line 176.

The pressure control valve 28 comprises a housing 222 having a longitudinally extending bore therein. A spool 226 is slidably positioned in the bore. The spool 226 comprises a pair of spaced lands 228,230 separated by a portion of reduced diameter 232. The housing 222 has a pair of ports 234,236 which are substantially centrally positioned. The axes of the ports 234,236 each lie in a radially extending plane, with the planes being aligned or slightly spaced from one another in an axial direction. Port 234 is connected by a fluid line 238 to ports 240 and 242. Port 240 is positioned adjacent port 234, and port 242 is positioned at one end of the bore. The fluid line 238 is dimensioned to act as a restrictor, or may have a restrictor therein. The spool 226 is biased towards the said one end of the bore by a spring 244. Port 236 defines a pressure inlet for the pressure control valve 28 and is connected to fluid line 206. Port 234 defines a pressure outlet for the pressure control valve 28 and is connected to actuate the friction device 46 by way of fluid line 246. In use, when fluid pressure is initially applied at the inlet port 236, fluid pressure is also applied to the friction device 46 (see line A to B on the graph in Figure 5) by way of outlet port 234 and the spool 226 stays in the rest position with land 228 abutting said one end of the bore. At point B, the friction elements of the friction device 46 make contact, and further increases in fluid pressure at the friction device 46 (from points B to C of Figure 5) provide a feedback fluid pressure through the fluid line 238 to move the spool 226 away from the said one end of the bore against the bias of the spring 244. At point C, the land 230 engages the housing 222 at the other end of the bore. The axial length of the portion 232 of the spool 226 is such that fluid flow is still possible between the inlet and outlet ports 236 and 234. Consequently, the full fluid pressure applied to inlet port 236 will result in full pressure being applied to the friction device 46 (points C to D of Figure 5). This arrangement provides for modulated application of the fluid pressure to the friction device 46 rather than using fluid flow (as with previously known arrangements) which can be affected by changes in fluid viscosity or temperature. Fluid pressure to the friction device 46 is increased gradually providing a smoother actuation of the friction device, and hence a smoother gear change. This arrangement also automatically compensates for any wear between the friction elements of the friction device 46.

The pressure control valves 30,32,34,36,38 are substantially the same as pressure control valve 28. Pressure control valve 30 has a spool 247, an inlet port 248 connected to fluid line 146 and an outlet port 250 which is connected to actuate friction device 48 by way of fluid line 252. Pressure control valve 32 has a spool 253, an inlet port 254 connected to fluid line 194 and an outlet port 256 which is connected to actuate friction device 50 by way of fluid line 258. Pressure control valve 34 has a spool 259, an inlet port 260 connected to fluid line 152 and an outlet port 262 which is connected to actuate friction device 52 by way of fluid line 264, and is also connected to fluid line 184. Pressure control valve 36 has a spool 265, an inlet port 266 connected to fluid line 220 and an outlet port 268 which is connected to actuate friction device 54 by way of fluid line 270. Pressure control valve 38 has a spool 271, an inlet port 272 connected to fluid line 90 and an outlet port 274 which is connected to actuate friction device 56 by way of fluid line 276.

The present invention relates to the use of the additional solenoid valve 318 which is positioned in the fluid line 130 between the connections to restrictor 102 and fluid line 80. Like the other solenoid valves 16, 18, 20, solenoid valve 318 is biased to be closed in its de-actuated state, or on failure of the control module. As will be explained in greater detail below, solenoid valve 318 acts to substantially prevent the transmission being downshifted to first gear when the vehicle is travelling above a predetermined speed in Drive (D) mode. The solenoid valve 318 can also be controlled, in manual drive mode, to prevent such downshifting without an additional operation being performed by the vehicle operator.

For the Park (P) mode of the transmission, fluid pressure generated by the pump 42 passes straight to exhaust by way of ports 92 and 96 in the manual valve 12. Any pressure in the fluid in any of the fluid lines of the hydraulic control circuit 10 is exhausted. The spools of the shift valve 14, pressure application valves 22,24,26, and the pressure control valves 28-38 all remain in their rest position; the solenoid valves 16,18,20,318 are closed; and all the friction devices 46-56 remain disengaged. In the Park mode the control module actuates a device (not shown) to lock one or more of the gears in the transmission.

For the Reverse (R) mode, the vehicle operator moves the spool 64 of the manual valve 12 to bring the reduced diameter portion 70 of the spool 64 into alignment with the ports 92 and 86, and the fluid in fluid line 90 and in inlet port 272 of pressure control valve 38 is pressurised. As described above, the pressurised fluid moves the spool 271 away from its rest position, and actuates the friction device 56. Also, the pressurised fluid in fluid line 90 acts on the ball 214 of ball valve 40 to close the said other end 218 of the ball valve to pressurise the fluid in fluid line 220 and inlet port 266 of pressure control valve 36. This pressurised fluid moves the spool 265 away from its rest position, and actuates the friction device 54. The friction devices 54,56 are actuated as described above with regard to Figure 5. The remaining fluid lines of the hydraulic control circuit 10 are still exhausted. The spools of the shift valve 14, pressure application valves 22,24,26, and the pressure control valves 28-34 all remain in their rest position; the solenoid valves 16,18,20,318 are de-actuated; and the friction devices 46-52 remain disengaged. Engagement of the friction devices 54 and 56 and disengagement of the friction devices 46-52 provides for actuation of the transmission in reverse mode - see Figure 6.

For the Neutral (N) mode, the vehicle operator moves the spool 64 of the manual valve to bring the land 68 across the port 92 to prevent pressurised fluid from the pump 42 reaching the rest of the hydraulic control circuit 10, and connects fluid line 90 to exhaust by way of ports 88 and 94 in the manual valve 12. Because of the connection of fluid line 90 to exhaust, the spools 265,271 of pressure control valves 36,38 respectively move back to their rest position, and the friction devices 54,56 become disengaged. The other fluid lines of the hydraulic control circuit 10 are connected to, or still connected to, exhaust. The spools of the shift valve 14, pressure application valves 22,24,26, and the pressure control valves 28-34 all remain in their rest position; the solenoid valves 16,18,20,318 are de-actuated; and the friction devices 46-52 remain disengaged.

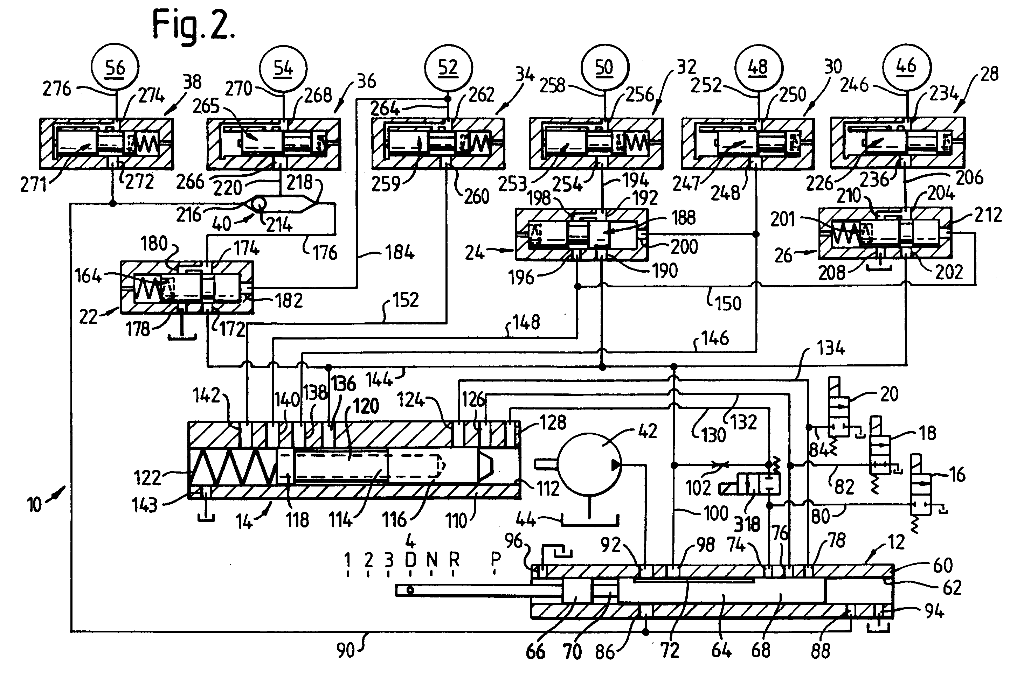

For the Drive (D) mode, the vehicle operator moves the spool 64 of the manual valve 12 to the position shown in Figures 1 and 2. This brings the groove 72 in the land 68 of the spool 64 into a position by which it fluidly connects ports 92 and 98 to pressurise the fluid in fluid lines 100 and 144 and provide pressurised fluid at the inlet ports 172,190,202 of each pressure application valve 22,24,26 respectively.

When the control module monitors a requirement for the transmission to be in first gear solenoid valves 16, 318 are opened (Figure 1), and the solenoid valves 18,20 can be opened or closed or left closed. Fluid can pass through restrictor 102 and through fluid line 80 and solenoid valves 16,318 to exhaust. However, the restrictor 102 is sized to prevent a collapse of fluid pressure in fluid line 100 and hence in the other pressurised parts of the hydraulic control circuit 10. Port 128 of shift valve 14 is connected to exhaust by way of fluid lines 130 and 80 and solenoid valve 16 thereby ensuring that the spool 114 of the shift valve is in the rest position. Fluid pressure is exhausted in fluid line 90 through ports 88 and 94 in manual valve 12, in fluid lines 184 and 152 through ports 142 and 143 in shift valve 14, in fluid line 146 through ports 138 and 143 in shift valve 14, and in fluid lines 148 and 150 through ports 140 and 143 in shift valve 14. This arrangement ensures that the friction devices 56, 52 and 48 are disengaged, and that the spools 164, 188 and 201 of pressure application valves 22,24,26 respectively remain in their rest position (as the pressure at control port 182,200,212 is exhausted through fluid lines 184,152; 146; and 150,148 respectively). As the spools 164, 188 and 201 of pressure application valves 22,24,26 respectively remain in their rest position, the pressurised fluid at the inlet port 172,190,202 of each pressure application valve pressurises the fluid in the fluid lines 176,194,206 respectively by way of outlet ports 174,192,204 respectively. Pressurised fluid in fluid line 176 acts on the ball 214 of ball valve 40 to close the said one end 216 of the ball valve to provide pressurised fluid in fluid line 220. The pressurised fluid in fluid lines 206,194,220 pressurises the fluid at the inlet ports 236,254,266 respectively of pressure control valves 28,32,36 respectively. This pressurised fluid at the inlet ports 236,254,266 moves the spools 226,253,265 respectively of the pressure control valves 28,32,36 respectively away from their rest position, and actuates the friction devices 46,50,54. The friction devices 46,50,54 are actuated as described above with regard to Figure 5. The engagement of the friction devices 46, 50, and 54 and the disengagement of the friction devices 48, 52 and 56 provides for actuation of the transmission in first gear of forward drive - see Figure 6.

When the control module monitors a requirement for the transmission to be in second gear the solenoid valve 18 is opened (Figure 2), the solenoid valves 16,318 are closed or left closed, and the solenoid valve 20 can be opened or closed. Fluid in fluid line 130 and port 128 of shift valve 14 is pressurised by way of restrictor 102 to move the spool 114 of the shift valve away from said one end thereof against the bias of the spring 122. Port 126 of shift valve 14 is connected to exhaust by way of fluid lines 132 and 82 and solenoid valve 18 thereby limiting the movement of the spool 114 of the shift valve. This movement of the spool 114 provides a fluid connection between ports 136 and 138 due to the positioning of the portion 120 of the spool. Fluid in fluid line 146 is therefore pressurised, thereby pressurising the fluid at the control port 200 of pressure application valve 24. The pressurised fluid at control port 200 moves the spool 188 in the pressure application valve 24 to block the fluid connection between the inlet and outlet ports 190,192, but to open a fluid connection between fluid lines 148 and 194 by way of ports 196 and 198. Fluid pressure is exhausted in fluid line 90 through ports 88 and 94 in manual valve 12, in fluid lines 184 and 152 through ports 142 and 143 in shift valve 14, and in fluid lines 148 and 150 through ports 140 and 143 in shift valve 14. This arrangement ensures that the friction devices 56, 52 and 50 are disengaged, and that the spools 164 and 201 of pressure application valves 22,26 respectively remain in their rest position (as the pressure at control ports 182,212 is exhausted through fluid lines 184,152; and 150,148 respectively). As the spools 164 and 201 of pressure application valves 22,26 respectively remain in their rest position, the pressurised fluid at the inlet port 172,202 of these pressure application valves pressurises the fluid in the fluid lines 176,206 respectively by way of outlet ports 174,204 respectively. Pressurised fluid in fluid line 176 acts on the ball 214 of ball valve 40 to close the said one end 216 of the ball valve to provide pressurised fluid in fluid line 220. The pressurised fluid in fluid lines 206,146,220 pressurises the fluid at the inlet ports 236,248,266 respectively of pressure control valves 28,30,36 respectively. This pressurised fluid at the inlet ports 236,248,266 moves the spools 226,247,265 respectively of the pressure control valves 28,30,36 respectively away from their rest position, and actuates the friction devices 46,48,54. The friction devices 46,48,54 are actuated as described above with regard to Figure 5. The engagement of the friction devices 46, 48, and 54 and the disengagement of the friction devices 50, 52 and 56 provides for actuation of the transmission in second gear of forward drive - see Figure 6.

When the control module monitors a requirement for the transmission to be in third gear the solenoid valve 20 is opened, and the solenoid valves 16,18,318 are closed or left closed. Fluid in fluid line 130 and port 128 of shift valve 14 is pressurised by way of restrictor 102 to move the spool 114 of the shift valve away from said one end thereof against the bias of the spring 122. Port 124 of shift valve 14 is connected to exhaust by way of fluid lines 134 and 84 and solenoid valve 20 thereby limiting the movement of the spool 114 of the shift valve. This movement of the spool 114 provides a fluid connection between ports 136, 138 and 140 due to the positioning of the portion 120 of the spool. Fluid in fluid lines 146, 148 and 150 is therefore pressurised, thereby pressurising the fluid at the control ports 200,212 of pressure application valves 24,26 respectively. The pressurised fluid at control ports 200,212 moves the spools 188,201 in the pressure application valves 24,26 respectively to block the fluid connection between the respective inlet and outlet ports 190,192; 202,204, but to open a fluid connection between fluid lines 148 and 194 by way of ports 196 and 198, and between fluid line 206 and exhaust by way of ports 208 and 210. Fluid pressure is exhausted in fluid line 90 through ports 88 and 94 in manual valve 12, and in fluid lines 184 and 152 through ports 142 and 143 in shift valve 14. This arrangement ensures that the friction devices 56, 52 and 46 are disengaged, and that the spool 164 of pressure application valve 22 remains in its rest position (as the pressure at control port 182 is exhausted through fluid lines 184 and 152). As the spool 164 of pressure application valve 22 remains in its rest position, the pressurised fluid at the inlet port 172 of this pressure application valve 22 pressurises the fluid in the fluid lines 176 by way of outlet ports 174. Pressurised fluid in fluid line 176 acts on the ball 214 of ball valve 40 to close the said one end 216 of the ball valve to provide pressurised fluid in fluid line 220. Although the spool 188 of pressure application valve 24 has moved away from its rest position, the fluid in fluid line 194 is still pressurised by way of ports 196,198 and the pressurised fluid in fluid line 148. The pressurised fluid in fluid lines 146,194,220 pressurises the fluid at the inlet ports 248,254,266 respectively of pressure control valves 30,32,36 respectively. This pressurised fluid at the inlet ports 248,254,266 moves the spools 247,253,265 respectively of the pressure control valves 30,32,36 respectively away from their rest position, and actuates the friction devices 48,50,54. The friction devices 48,50,54 are actuated as described above with regard to Figure 5. The engagement of the friction devices 48, 50, and 54 and the disengagement of the friction devices 46, 52 and 56 provides for actuation of the transmission in third gear of forward drive - see Figure 6.

When the control module monitors a requirement for the transmission to be in fourth gear all the solenoid valves 16,18,20,318 are closed or left closed. Fluid in fluid line 130 and port 128 of shift valve 14 is pressurised by way of restrictor 102 to move the spool 114 of the shift valve away from said one end thereof against the bias of the spring 122. None of the ports 124,126,128 of shift valve 14 are connected to exhaust and so the spool 114 of the shift valve is moved to its maximum extent. This movement of the spool 114 provides a fluid connection between ports 136, 138, 140 and 142 due to the positioning of the portion 120 of the spool. Fluid in fluid lines 146, 148, 150, 152 and 184 is therefore pressurised, thereby pressurising the fluid at the control ports 182,200,212 of all the pressure application valves 22,24,26 respectively. The pressurised fluid at control ports 182,200,212 moves the spools 164,188,201 in the pressure application valves 22,24,26 respectively to block the fluid connection between the respective inlet and outlet ports 172,174; 190,192; 202,204, but to open a fluid connection between fluid line 176 and exhaust by way of ports 178 and 180, between fluid lines 148 and 194 by way of ports 196 and 198, and between fluid line 206 and exhaust by way of ports 208 and 210. Fluid pressure is exhausted in fluid line 90 through ports 88 and 94 in manual valve 12, and in fluid line 220 by way of ball valve 40 and fluid line 176 or 90. This arrangement ensures that the friction devices 56, 54 and 46 are disengaged. Although the spool 188 of pressure application valve 24 has moved away from its rest position, the fluid in fluid line 194 is still pressurised by way of ports 196,198 and the pressurised fluid in fluid line 148. The pressurised fluid in fluid lines 152,194,220 pressurises the fluid at the inlet ports 248,254,260 respectively of pressure control valves 30,32,34 respectively. This pressurised fluid at the inlet ports 248,254,260 moves the spools 247,253,259 respectively of the pressure control valves 30,32,34 respectively away from their rest position, and actuates the friction devices 48,50,52. The friction devices 48,50,52 are actuated as described above with regard to Figure 5. The engagement of the friction devices 48, 50, and 52 and the disengagement of the friction devices 46, 54 and 56 provides for actuation of the transmission in fourth gear of forward drive - see Figure 6.

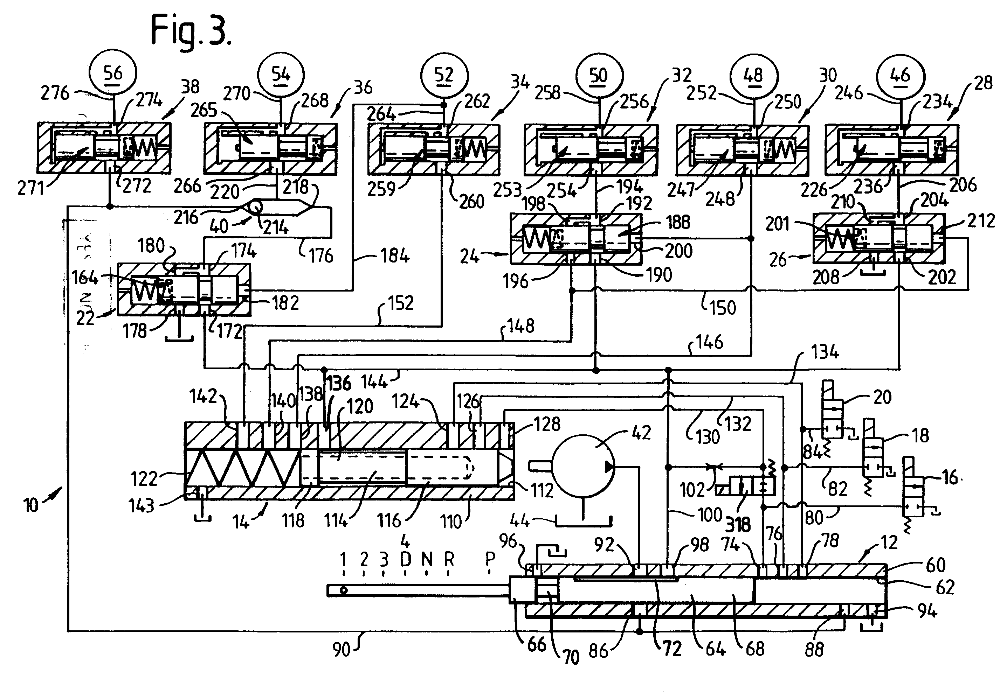

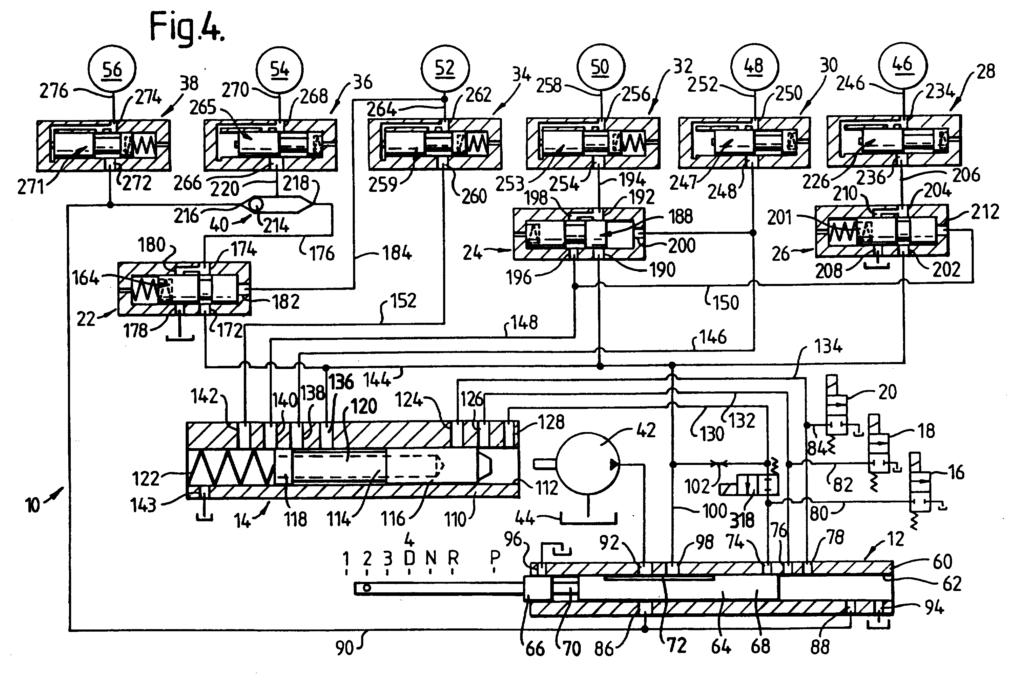

If the vehicle operator wishes to manually operate the transmission, from personal preference or because of failure of the control module, the vehicle operator can do so by simply moving the spool 64 of the manual valve 12. For first gear operation, the spool 64 is moved to the position shown in Figure 3. In this case, with the solenoid valves 16,18,20 closed (either due to the position of the spool 64 being away from the position for Drive (D) mode or due to the failure of the control module) and with solenoid valve 318 open (due to manual control as described below), the fluid line 130 and port 128 of shift valve 14 are exhausted by way of ports 74 and 94 in the manual valve 12. The remaining elements of the hydraulic control circuit 10 operate in exactly the same way as shown in regard to Figure 1 to provide first gear ratio for forward drive. For second gear operation, the spool 64 is moved to the position shown in Figure 4. In this case, with the solenoid valves 16,18,20 closed and with solenoid valve 318 either open or closed, the fluid line 132 and port 126 of shift valve 14 are exhausted by way of ports 76 and 94 in the manual valve 12. The remaining elements of the hydraulic control circuit 10 operate in exactly the same way as shown in regard to Figure 2 to provide second gear ratio for forward drive. For third gear operation, the vehicle operator moves the spool 64 to the required position. In this case, with the solenoid valves 16,18,20 closed and with solenoid valve 318 closed, the fluid line 134 and port 124 of shift valve 14 are exhausted by way of ports 78 and 94 in the manual valve 12. The remaining elements of the hydraulic control circuit 10 operate in exactly the same way as described above to provide third gear ratio for forward drive. For fourth gear operation, the vehicle operator moves the spool 64 to the Drive (D) position. In this case, with the solenoid valves 16,18,20 closed and with the solenoid valve 318 closed, none of the ports 124,126,128 of shift valve 14 are exhausted. The elements of the hydraulic control circuit 10 operate in exactly the same way as described above to provide fourth gear ratio for forward drive.

An example of a circuit for use in the control module is shown in Figure 7. This circuit comprises a speed sensor 280 (which is preferably in the form of a magnetic pick-up) associated with either the output shaft of the transmission or the vehicle wheels which sends a signal through a digital-to-analogue converter 282 to a first amplifier 284. A throttle position sensor 286 (which is preferably in the form of a potentiometer) provides a signal to second and third amplifiers 288,290. A kick-down switch 292 (which is operable by movement of the accelerator pedal) can be connected across the throttle position sensor 286 to override the signal from the throttle position sensor when the vehicle operator requires a downshift in the transmission. The output signals from the first and second amplifiers 284,288 are fed to a summation circuit 294 along with a signal from a switch 296, preferably positioned in the vehicle dashboard, which allows the vehicle operator to select the value of engine braking required. If the switch 296 is in position "0" there is no automatic downshift, on accelerator pedal release, to decelerate the vehicle by engine braking. If the switch 296 is placed in position "I", the circuit is set to provide automatic downshift, on accelerator pedal release, to decelerate the vehicle by engine braking at a normal (average) speed; for example, fourth to third ratio downshift at 90 kph; third to second ratio downshift at 50 kph; and second to first ratio downshift at 20 kph. If the switch 296 is placed in position "II", the circuit is set to provide automatic downshift, on accelerator pedal release, to decelerate the vehicle by engine braking at higher speeds; for example, fourth to third ratio downshift at 120 kph; third to second ratio downshift at 80 kph; and second to first ratio downshift at 40 kph. The switch 296 may be in series with a brake pedal switch 298 which is normally open but which closes when the brake pedal is slightly depressed to downshift the transmission for automatic deceleration by use of engine braking. The output from the summation circuit 294 is fed to a comparator 300,302,304 and a driver or relay 306,308,310 associated with, and controlling the operation of, each solenoid valve 16,18,20 respectively. The output from the third amplifier 290 is also fed to the comparator 304. The outputs from the first amplifier 284 and from the comparator 302 are fed to another comparator 312 and a driver or relay 314 associated with, and controlling the operation of, a solenoid valve 316 controlling operation of the vehicle clutch (not shown) which may be a torque converter clutch or an open clutch. The circuit also includes a number of variable resistors R, the value of which is set to provide upshifting and downshifting of the transmission at predetermined vehicle speeds, and suitable associated operation of the clutch. Although not shown, the circuit includes a spool position sensor switch in its power supply circuit which is associated with the spool 64 of the manual valve 12. The arrangement is such that the solenoid valves 16,18,20 can only be actuated when the spool position sensor switch indicates that the spool 64 is in the Drive (D) position. As an option, the circuit may also include a mode switch (not shown) in its power supply circuit which is operable by the vehicle operator to allow selection between automatic and manual operation of the transmission. In a further option, switches 307, 309, 311 may be connected in series with solenoid valves 16, 18, 20 respectively. These switches 307, 309, 311 may be part of, or actuated by the spool position sensor switch mentioned above, and are biased to a normally open position. When the spool 64 is in the position shown in Figure 3 for the first gear operation, switch 307 is closed to open solenoid valve 16. Switches 309 and 311 are open. Consequently, fluid line 130 and port 128 of shift valve 14 can also be exhausted by way of line 80 and solenoid valve 16. When the spool 64 is in the position shown in Figure 4 for second gear operation, switch 309 is closed to open solenoid valve 18. Switches 307 and 311 are open. Consequently, fluid line 132 and port 126 of shift valve 14 can also be exhausted by way of line 82 and solenoid valve 18. When the spool 64 is in position for third gear operation, switch 311 is closed to open solenoid valve 20. Switches 307 and 309 are open. Consequently, fluid line 134 and port 124 of shift valve 14 can also be exhausted by way of line 84 and solenoid valve 20. As an alternative to this type of control module, a computer based control module could be used instead.

As mentioned above, in order to substantially prevent the transmission being downshifted to first gear when the vehicle is travelling above a predetermined speed (which could result in damage to the transmission or engine), the circuit shown in Figure 8 is used in conjunction with the control module of Figure 7, or any other suitable control module, and in conjunction with the solenoid valve 318 positioned in fluid line 130 (Figures 1 to 4). The predetermined speed could be 20 kph or 40 kph as indicated above for downshifting from second gear to first gear, or some other suitable value. The control module 500 is indicated in dashed outline. The downshift protection circuit of Figure 8 includes a safety mode relay 506 in series with a downshift speed limit relay 508, and a relay 510 controlling the operation of the solenoid valve 318. The downshift protection circuit preferably also includes the vehicle ignition switch 502, and a mode switch 504 by which the vehicle operator can select between automatic (A) and manual (M) operation of the transmission. The mode switch 504 has no effect on the above described operation of the transmission, but allows the vehicle operator to switch the downshift protection circuit on or off. The safety mode relay 506, which is normally open, is associated with a status check circuit for the control module 500, and closes if no defect is detected in the control module. The downshift speed limit relay 508 is associated with the speed sensor 280 of Figure 7 and is normally open when the vehicle speed is above the predetermined value. If the vehicle operator selects automatic (A) operation, and relays 506 and 508 are closed, relay 510 is actuated and the above mentioned additional solenoid valve 318 is opened. This allows the port 128 of shift valve 14 to be connected to exhaust (as shown in Figure 1) when first gear operation is required and the vehicle speed is below the predetermined value. If the vehicle speed is above the predetermined value, the downshift speed limit relay 508 is opened, and the relay 510 is de-actuated such that solenoid valve 318 is closed, preventing the port 128 being exhausted, thereby preventing downshifting from second gear to first gear even if the vehicle operator moves the spool 64 of the manual valve 12 to the position shown in Figure 3 with the mode switch 504 still in position A. As mentioned above, like the other solenoid valves 16,18,20, solenoid valve 318 is biased to be closed in its de-actuated state, or on failure of the control module.

Preferably, and additionally, the downshift protection circuit includes a push-button switch 512 and a contact 514, associated with relay 510, and effectively connected in parallel to one another between the relay 510, and preferably both second and first gear selection positions of the shift lever 516. The shift lever 516 completes an electrical circuit by being connected to the mode switch 504. If the vehicle operator selects manual (M) operation and moves the shift lever 516 from second gear ratio selection to first gear ratio selection, the transmission will only be changed to first gear by the vehicle operator completing the additional step of depressing the push-button switch 512 (which is normally biased open) to a closed position to actuate relay 510 and open additional solenoid valve 318. Depressing the push-button switch 512 acts to close the contact 514 so that after the push-button switch is released, the relay 510 remains actuated (until the shift lever 516 is moved to third gear selection position or mode switch is moved to position (A)). Opening of solenoid valve 318 allows the port 128 of shift valve 14 to be connected to exhaust by way of line 130, and ports 74 and 94 in manual valve 12 (as shown in Figure 3). This two step operation - moving the shift lever 516 and pushing the push-button switch 512 - reduces the risk of the transmission being downshifted to first gear in manual mode when the vehicle is travelling at high speed. Push-button switch 512 can be positioned on the vehicle dashboard.

The electrical link between the second gear selection position and the first gear selection position of the shift lever 516 prevents the solenoid valve 318 opening when manually upshifting from first gear to second gear, to allow manual first to second gear ratio upshift and second to first gear ratio downshift without pushing the push-button switch 512. This arrangement allows the vehicle operator to push the push-button switch 512 before moving the shift lever 516 to the position for first gear ratio. This feature is optional, and the switches 512,514 could be connected solely to the first gear selection position only.

It will be appreciated that by positioning an additional solenoid valve in fluid line 132 between port 126 and fluid line 82, and controlling the operation of the additional solenoid valve using a circuit similar to that of Figure 8, then downshift protection can be provided for third to second gear downshift. Similarly, positioning a solenoid valve in fluid line 134 can provide downshift protection for fourth to third gear downshift.

It will also be appreciated that the present invention is operable without the use of the control module. For example, the safety mode relay 506 and downshift speed limit switch 508 may be operated independently by another speed sensor other than speed sensor 280.

Further details of the operation of the transmission described above with regard to Figures 1 to 7 can be found in our patent application no. 94 200 575 published 02/11/94 as EP-A-622 571 and filed the same day as the present application. Whilst the present invention has been described with respect to this transmission, it will be appreciated that the present invention can be used with any type of hydraulically operated transmission in which automatic downshifting from one gear ratio to another gear ratio is achieved by exhausting a fluid line. Positioning the solenoid valve 318 in the fluid line to be exhausted for downshifting, and controlling the operation of the solenoid valve as described above in relation to Figure 8, will provide similar protection for the hydraulically operated transmission.

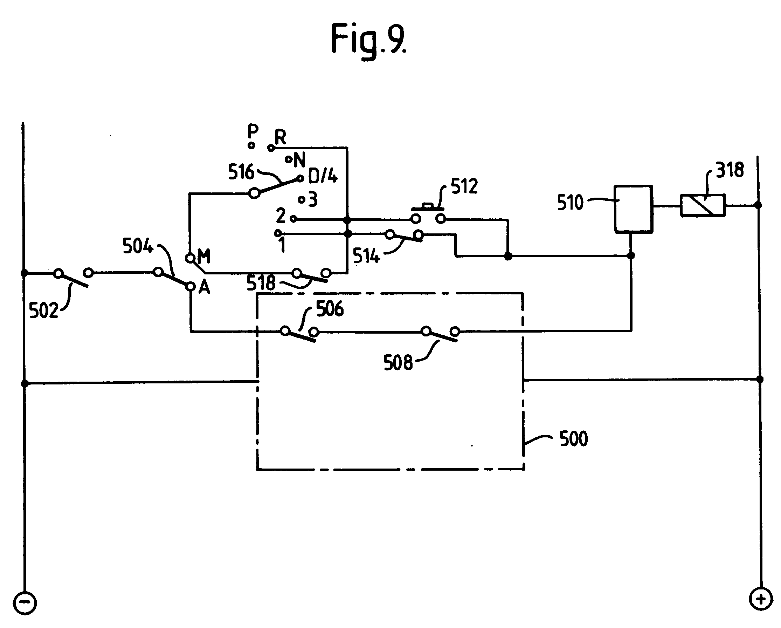

Figure 9 shows a modification to the downshift protection circuit of Figure 8. This modification allows for easy switching between reverse gear ratio and first gear ratio should a driven wheel of the vehicle become stuck, for example in a mud- or snow-filled hole. Easy switching between reverse and first gear ratio, and controlled use of the vehicle throttle, will allow the vehicle to oscillate or rock backwards and forwards to extricate the stuck wheel. The modified circuit includes an electrical connection between the push-button switch 512 and the reverse gear ratio position for the shift lever 516, on the opposite side of the push-button switch to the relay 510. The circuit further includes a time delay relay 518 electrically connected between the contact 514 and the manual position M of the mode switch 504. The time delay relay 518 is such that, after closing the contacts, the contacts remains closed for a predetermined period of time (for example, 10 seconds), and then the contacts open automatically. If the mode switch 504 is set to the automatic position A, the transmission can be cycled between reverse and first gear ratio simply by moving the shift lever 516 between positions R and D. If the mode switch 504 is set to the manual position M, the cycling between reverse gear ratio and first gear ratio can also be achieved by moving the shift lever 516 between positions R and D. In this case, when the shift lever is in position R, the push-button switch 512 is pushed which closes relay 510 and opens solenoid valve 318, and also closes contact 514 and time delay relay 518. Moving the shift lever 516 to position D will then place the transmission in first gear ratio because both solenoid valves 318 and 16 are open, and fluid line 130 is connected to exhaust. The transmission remains in first gear ratio for the length of time that time delay relay 518 remains closed (which can be pre-set to any suitable value other than the 10 seconds mentioned above) or until the shift lever 516 is moved back to position R. This modification to the downshift protection circuit of Figure 8 therefore provides the additional feature of allowing easy cycling between first and reverse gear ratio for the transmission, should such cycling be required.

## Claims

1. A control circuit for a hydraulically operated transmission for a vehicle, the transmission including a fluid line (130) containing pressurised hydraulic fluid and which is connectable to an exhaust port for downshifting from one forward gear ratio to another forward gear ratio, the control circuit comprising a solenoid operated valve (318) positionable in the fluid line; a relay (510) connected to, and controlling the opening and closing of, the solenoid operated valve; and speed sensor means (280, 508) monitoring the speed of the vehicle; characterised in that the solenoid operated valve (318) is biased to a normally closed position; and in that the speed sensor means (280, 508) provides a signal to the relay (510) to open the solenoid operated valve when the speed of the vehicle is below a predetermined level, the arrangement preventing downshifting when the speed of the vehicle is above the predetermined level.

2. A control circuit as claimed in Claim 1, wherein the speed sensor means is part of a control module (500) for the transmission and comprises a speed limit relay (508) which is controlled by a speed sensor (280).

3. A control circuit as claimed in Claim 1 or Claim 2, in which the transmission includes a shift lever (516) manually movable to a position for selecting said another forward gear ratio to form an electrical circuit, wherein the electrical circuit also provides a signal to the relay (510) to open the solenoid operated valve (318) when a switch (512) in the electrical circuit is manually closed.

4. A control circuit as claimed in Claim 3, further comprising a mode switch (504) which is manually movable between automatic mode for supplying electrical power to the speed sensor means and manual mode for supplying electrical power to the electrical circuit.

5. A control circuit as claimed in Claim 3 or Claim 4, in which the shift lever (516) is manually movable to a reverse gear ratio position, wherein the electrical circuit further includes an electrical connection to the reverse gear ratio position such that operation of the switch (512) signals the relay (510) to open the solenoid operated valve (318) when the shift lever is in the reverse gear ratio position, and a time dependent relay (518) which closes when the switch is operated, but which opens after a predetermined time to terminate the signal to the relay (510) to close the solenoid operated valve.

6. A control circuit as claimed in any one of Claims 1 to 5, wherein the said one forward gear ratio is second gear ratio, and said another forward gear ratio is first gear ratio.

## Patentansprüche

1. Steuerkreis für ein hydraulisch betätigtes Getriebe für ein Fahrzeug, wobei das Getriebe eine Fluidleitung (130) umfaßt, die unter Druck gesetztes Hydraulikfluid enthält und mit einer Auslaßöffnung zum Herunterschalten von einem Vorwärtsübersetzungsverhältnis zu einem anderen Vorwärtsübersetzungsverhältnis verbunden werden kann, und der Steuerkreis ein solenoidbetätigtes Ventil (318), das in der Fluidleitung positionierbar ist; ein Relais (510), das mit dem solenoidbetätigten Ventil verbunden ist und das Öffnen und Schließen desselben steuert; und ein Geschwindigkeitssensormittel (280, 508) umfaßt, das die Geschwindigkeit des Fahrzeuges überwacht;
dadurch **gekennzeichnet,**
daß das solenoidbetätigte Ventil (318) in eine normal geschlossene Position vorgespannt ist; und dadurch, daß das Geschwindigkeitssensormittel (280, 508) ein Signal an das Relais (510) liefert, um das solenoidbetätigte Ventil zu öffnen, wenn die Geschwindigkeit des Fahrzeuges unter einem vorbestimmten Pegel liegt, wobei die Anordnung ein Herunterschalten verhindert, wenn die Geschwindigkeit des Fahrzeuges über dem vorbestimmten Pegel liegt.

2. Steuerkreis nach Anspruch 1,
worin das Geschwindigkeitssensormittel ein Teil eines Steuermoduls (500) für das Getriebe ist und ein Geschwindigkeitsgrenzrelais (508) umfaßt, welches durch einen Geschwindigkeitssensor (280) gesteuert wird.

3. Steuerkreis nach Anspruch 1 oder 2,
in welchem das Getriebe einen Schalthebel (516) umfaßt, der manuell in eine Position zum Auswählen des anderen Vorwärtsübersetzungsverhältnisses bewegt werden kann, um einen elektrischen Kreis zu bilden, worin der elektrische Kreis ebenso ein Signal an das Relais (510) liefert, um das solenoidbetätigte Ventil (318) zu öffnen, wenn ein Schalter (512) in dem elektrischen Kreis manuell geschlossen wird.

4. Steuerkreis nach Anspruch 3,
der weiter einen Modusschalter (504) umfaßt, welcher manuell zwischen einem automatischen Modus zum Zuführen elektrischer Energie zu dem Geschwindigkeitssensormittel und einem manuellen Modus zum Zuführen elektrischer Energie zu dem elektrischen Kreis bewegbar ist.

5. Steuerkreis nach Anspruch 3 oder 4,
in welchem der Schalthebel (516) manuell in eine Rückwärtsübersetzungsverhältnisposition bewegbar ist, worin der elektrische Kreis weiter eine elektrische Verbindung mit der Rückwärtsübersetzungsverhältnisposition, derart, daß die Betätigung des Schalters (512) dem Relais (510) signalisiert, das solenoidbetätigte Ventil (318) zu öffnen, wenn der Schalthebel sich in der Rückwärtsübersetzungsverhältnisposition befindet, und ein zeitabhängiges Relais (518) umfaßt, welches schließt, wenn der Schalter betätigt wird, aber welches nach einer vorbestimmten Zeit öffnet, um das Signal zu dem Relais (510) zu beenden und somit das solenoidbetätigte Ventil zu schließen.

6. Steuerkreis nach einem der Ansprüche 1 bis 5,
worin das eine Vorwärtsübersetzungsverhältnis das zweite Übersetzungsverhältnis ist, und das andere Vorwärtsübersetzungsverhältnis das erste Übersetzungsverhältnis ist.

## Revendications

1. Circuit de commande pour une transmission à fonctionnement hydraulique pour un véhicule, la transmission comprenant une ligne de fluide (130) contenant un fluide hydraulique sous pression et qui peut être reliée à un orifice de sortie pour une rétrogradation d'un rapport avant de transmission vers un autre rapport avant de transmission, le circuit de commande comprenant une vanne actionnée par solénoïde (318) pouvant être placée dans la ligne de fluide ; un relais (510) relié à la vanne actionnée par solénoïde et commandant son ouverture et sa fermeture ; et des moyens de détection de vitesse (280, 508) surveillant la vitesse du véhicule ; caractérisé en ce que la vanne actionnée par solénoïde (318) est sollicitée vers une position normalement fermée ; et en ce que les moyens de détection de vitesse (280, 508) envoient un signal au relais (510) pour ouvrir la vanne actionnée par solénoïde quand la vitesse du véhicule est inférieure à une valeur prédéterminée, la disposition empêchant une rétrogradation quand la vitesse du véhicule est supérieure à la valeur prédéterminée.

2. Circuit de commande selon la revendication 1, dans lequel les moyens de détection de vitesse font partie d'un module de commande (500) pour la transmission et comprennent un relais de limite de vitesse (508) qui est commandé par un capteur de vitesse (280).

3. Circuit de commande selon la revendication 1 ou 2, dans lequel la transmission comprend un levier de changement de rapport (516) pouvant être déplacé manuellement vers une position pour sélectionner ledit autre rapport avant de transmission afin de former un circuit électrique, dans lequel le circuit électrique fournit aussi un signal au relais (510) pour ouvrir la vanne actionnée par solénoïde (318) quand un interrupteur (512) dans le circuit électrique est fermé manuellement.

4. Circuit de commande selon la revendication 3, comprenant en outre un commutateur de mode (504) qui peut être déplacé manuellement entre un mode automatique pour fournir une puissance électrique aux moyens de détection de vitesse et un mode manuel pour fournir une puissance électrique au circuit électrique.

5. Circuit de commande selon la revendication 3 ou 4, dans lequel le levier de changement de rapport (516) peut être déplacé manuellement vers une position de rapport de marche arrière, dans lequel le circuit électrique comprend en outre une liaison électrique avec la position de rapport de marche arrière, de sorte qu'une manoeuvre de l'interrupteur (512) indique au relais (510) d'ouvrir la vanne actionnée par solénoïde (318) quand le levier de changement de rapport est dans la position de rapport de marche arrière, et un relais temporisé (518) qui se ferme quand l'interrupteur est actionné, mais qui s'ouvre après une durée prédéterminée pour interrompre le signal au relais (510) afin de fermer la vanne actionnée par solénoïde.

6. Circuit de commande selon l'une quelconque des revendication 1 à 5, dans lequel ledit rapport avant de transmission est le deuxième rapport de transmission, et ledit autre rapport avant de transmission est le premier rapport de transmission.
